(19) Europäisches Patentamt
European Patent Office
Office européen des brevets

(11) **EP 2 750 074 A1**

(12) **EUROPEAN PATENT APPLICATION**
published in accordance with Art. 153(4) EPC

(43) Date of publication:
**02.07.2014 Bulletin 2014/27**

(51) Int Cl.:
***G06F 21/60*** *(2013.01)*     ***G06F 17/30*** *(2006.01)*
***G06Q 30/02*** *(2012.01)*

(21) Application number: **12825309.3**

(22) Date of filing: **16.08.2012**

(86) International application number:
**PCT/JP2012/071250**

(87) International publication number:
**WO 2013/027785 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2011   JP 2011183610**

(71) Applicant: **NEC Corporation
Tokyo 108-8001 (JP)**

(72) Inventors:
• **SASAKI, Takayuki
Tokyo 108-8001 (JP)**
• **FURUKAWA, Ryo
Tokyo 108-8001 (JP)**

(74) Representative: **Vossius & Partner
Siebertstrasse 4
81675 München (DE)**

(54) **ANONYMIZATION DEVICE, ANONYMIZATION METHOD, AND RECORDING MEDIUM RECORDING PROGRAM THEREFOR**

(57)    The present invention provides an anonymization device capable of indicating what a user does in order to obtain useful privacy information. The anonymization device is provided with: an analysis means which outputs an analysis result of privacy information including personal information on the basis of an analysis command; and a feedback information creation means which creates the analysis command on the basis of a disclosure request including disclosure object information indicating an object to be disclosed and disclosure format information indicating the format of the disclosure, outputs the analysis command to the analysis means, and creates and outputs a disclosure response including feedback information which suggests a change to the disclosure request to increase anonymity, on the basis of the anonymity in the analysis result received from the analysis means.

Fig.1

100  ANONYMIZATION DEVICE

110

ANALYSIS UNIT

120

FEEDBACK INFORMATION
CREATION UNIT

EP 2 750 074 A1

**Description**

TECHNICAL FIELD

The present invention relates to an anonymization device, an anonymization method and a program therefor, which controls disclosure of privacy information.

BACKGROUND ART

Various technologies which analyze specific information and provide an analysis result thereof to a user are known. When the specific information is privacy information, an information providing system which provides information to a user requires processing (anonymization) to secure anonymity of the privacy information. On the other hand, when the information providing system discloses privacy information to a user, the information providing system, according to a request of the user, carries out statistical analysis processing for example to the privacy information to which anonymization was performed. Then the information providing system discloses analyzed information obtained by the analysis processing to the user. In this case, it is also required to secure the anonymity of privacy information which becomes its base in the analyzed information with the predetermined level.

An example of an information providing system is disclosed in patent document 1. The information providing system described in patent document 1 calculates an evaluation value of a statistical object in consideration of significance to a category of administration statistical information for a user. And the information providing system extracts and provides information on the statistical object suitable for the user using the calculated evaluation value.

However, the information providing system described in patent document 1 has a problem of not taking into consideration about privacy protection (anonymity) of statistical information (information in relation to privacy information) including personal information.

An example of a data disclosure device tackling the above-mentioned problem is disclosed in patent document 2. The data disclosure device of patent document 2 calculates anonymity of the privacy information when disclosing privacy information. Next, when calculated anonymity is less than a desired value, the data disclosure device changes a particle size of disclosed privacy information based on a prescribed rule held in a system and outputs privacy information which has secured and desired anonymity.

[Patent document]

[Patent document 1] Japanese Patent Application Laid-Open No. 2008-117014
[Patent document 2] Japanese Patent Application Laid-Open No. 2007-219636

SUMMARY OF THE INVENTION

[PROBLEM TO BE SOLVED BY THE INVENTION]

However, the data disclosure device of technical literature 2 mentioned above changes the particle size of disclosed privacy information in order to acquire desired anonymity based on the prescribed rule held in the system. Accordingly, a case when privacy information outputted from the data disclosure device is not useful for the user is thought. In such case, the user cannot know what should be done in order to obtain useful privacy information.

That is, the data disclosure device has a problem of inability to indicate what a user does in order to acquire useful privacy information.

An example of an object of the present invention is to provide an anonymization device, an anonymization method and a program therefor, which can solve a problem mentioned above.

[MEANS FOR SOLVING A PROBLEM]

An anonymization device according to one aspect of the present invention includes
an analysis means for outputting, concerning privacy information including at least one or more personal information for each individual, an analysis result of the privacy information based on an analysis command including analysis object information which indicates the personal information set as an analysis object and analysis method information which indicates an analysis method; and
a feedback information creation means for creating the analysis command on the basis of a disclosure request including disclosure object information indicating an object to be disclosed and disclosure format information indicating a format of the disclosure, outputting the analysis command to the analysis means, and creating and outputting a disclosure response including feedback information which suggests a change to increase anonymity concerning at least one of the disclosure object information and the disclosure format information, on the basis of the anonymity of the analysis result received from the analysis means, concerning the privacy information.

An anonymization method according to one aspect of the present invention, which a computer executes, and comprising:

outputting, concerning privacy information including at least one or more personal information for each individual, an analysis result of the privacy information based on an analysis command including analysis object information which indicates the personal information set as an analysis object and analysis method information which indicates an analysis method;

creating and outputting the analysis command on the basis of a disclosure request including disclosure object information indicating an object to be disclosed and disclosure format information indicating the format of the disclosure; and creating and outputting a disclosure response including feedback information which suggests a change to increase anonymity concerning at least one of the disclosure object information and the disclosure format information, on the basis of the anonymity of the analysis result, concerning the privacy information.

A nonvolatile medium according to one aspect of the present invention recording a program for making a computer execute processing of:

outputting, concerning privacy information including at least one or more personal information for each individual, an analysis result of the privacy information based on an analysis command including analysis object information which indicates the personal information set as an analysis object and analysis method information which indicates an analysis method;

creating and outputting the analysis command on the basis of a disclosure request including disclosure object information indicating an object to be disclosed and disclosure format information indicating the format of the disclosure; and creating and outputting a disclosure response including feedback information which suggests a change to increase anonymity concerning at least one of the disclosure object information and the disclosure format information, on the basis of the anonymity of the analysis result, concerning the privacy information.

[EFFECT OF THE INVENTION]

An effect by the present invention is that it is capable of indicating what a user does in order to acquire useful privacy information.

BRIEF DESCRIPTION OF THE DRAWINGS

Fig. 1 is a block diagram showing a configuration of a first exemplary embodiment.
Fig. 2 is a diagram showing an example of privacy information in the first exemplary embodiment.
Fig. 3 is a diagram showing an example of sample information in the first exemplary embodiment.
Fig. 4 is a diagram showing an example of disclosure request in the first exemplary embodiment.
Fig. 5 is a diagram showing an example of an analysis command in the first exemplary embodiment.
Fig. 6 is a diagram showing an example of an analysis result in the first exemplary embodiment.
Fig. 7 is a diagram showing an example of a disclosure response in the first exemplary embodiment.
Fig. 8 is a block diagram showing a hardware configuration of the first exemplary embodiment.
Fig. 9 is a diagram showing an example of an analysis result in the first exemplary embodiment.
Fig. 10 is a flow chart showing operation of an anonymization device in the first exemplary embodiment.
Fig. 11 is a diagram showing an example of a disclosure response in a second exemplary embodiment.
Fig. 12 is a block diagram showing a configuration of the second exemplary embodiment of the present invention.
Fig. 13 is a block diagram showing an example of a non-volatile storage medium in which a program was recorded.

EXEMPLARY EMBODIMENTS FOR CARRYING OUT OF THE INVENTION

Next, an exemplary embodiment of the present invention will be described in detail with reference to drawings.

<First Exemplary Embodiment>

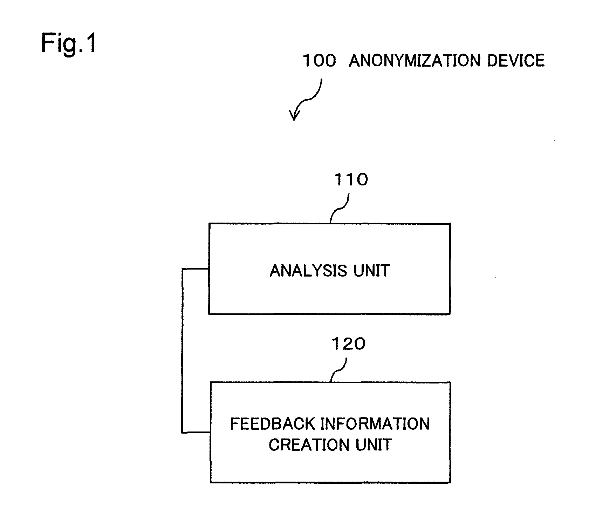

Fig. 1 is a block diagram showing a configuration of a first exemplary embodiment of the present invention.

Referring to Fig. 1, an anonymization device 100 related to this exemplary embodiment includes an analysis unit 110 and a feedback information creation unit 120.

First, an outline of the anonymization device 100 related to this exemplary embodiment will be described.

Firstly, the analysis unit 110 of the anonymization device 100 related to this exemplary embodiment analyzes the privacy information based on an analysis command which directs an analysis of privacy information, and outputs an analysis result. Moreover, the analysis command includes analysis object information which indicates personal information set as an analysis object and analysis method information which indicates a method of the analysis concerning privacy information including at least one or more personal information for every individual.

Note that first, the analysis unit 110 selects the personal information set as the analysis object among the privacy information based on the analysis object information included in the analysis command in operation which analyzes privacy information. Hereafter, the personal information set as the analysis object among the privacy information selected based on the analysis object information is called sample information. Next, the analysis unit 110 analyzes the sample information based on the analysis method information. The analysis unit 110 outputs the analysis result of the analysis to the feedback information creation unit 120.

Note that the analysis result is a list of attribute values, for example. Description of details of the attribute value will be made later. The analysis result may be a parameter of a fitting function (detailed description will be made later). Note that a case when the analysis result is a parameter of the fitting function will be described in detail in a third exemplary embodiment mentioned later. The analysis result may be one obtained an arbitrary data analysis method other than the above.

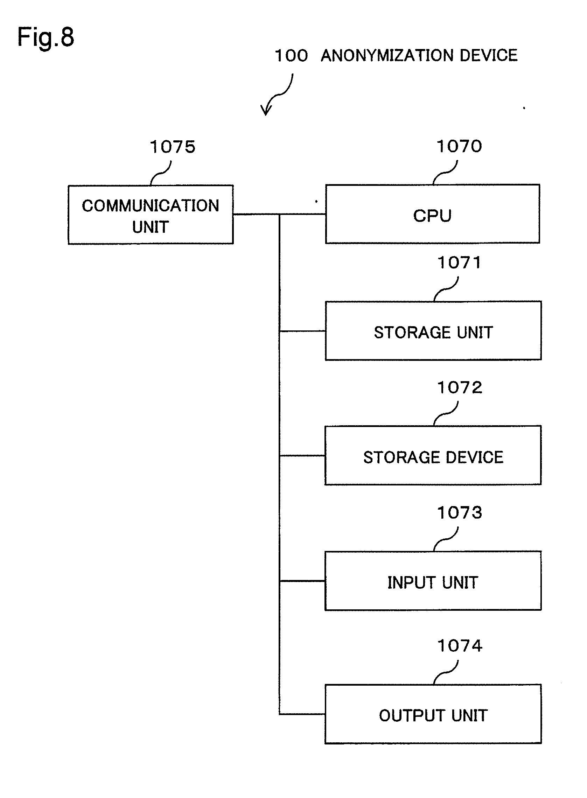

Secondly, the feedback information creation unit 120 of the anonymization device 100 receives disclosure request. For example, the feedback information creation unit 120 receives the disclosure request from an external apparatus (not shown), for example via a communication unit 1075 mentioned later shown in Fig. 8.

Note that the disclosure request includes disclosure object information which indicates an object of disclosure and disclosure format information which indicates the form of the disclosure concerning the privacy information.

Next, the feedback information creation unit 120 creates the analysis command based on the received disclosure request and outputs the analysis command to the analysis unit 110. For example, the feedback information creation unit 120 creates the analysis object information based on the disclosure object information, creates the disclosure method information based on the disclosure object information and the disclosure format information, and generates the analysis command.

The feedback information creation unit 120 determines anonymity of the analysis result received from the analysis unit 110, and then creates disclosure response including feedback information based on a determination result of the anonymity, and outputs it. The feedback information creation unit 120 may output the disclosure response including the feedback information to a display so that the user may see when the anonymity is lower than a predetermined level (threshold value), for example. In this case, the disclosure response does not include the analysis result. The feedback information creation unit 120 may output the analysis result as the disclosure response to the display when the anonymity is higher than the predetermined level (threshold value).

Here, for example, the anonymity of the analysis result is k-anonymity. The anonymity of the analysis result may be 1-diversity. The anonymity of the analysis result may be the amount of information of the fitting function. The anonymity of the analysis result may be an optional anonymity index other than the above.

The feedback information is information which suggests change concerning at least one of the disclosure object information and the disclosure format information.

The feedback information creation unit 120 may possess the function that changes the disclosure object information and the disclosure format information based on the feedback information and outputs them to the analysis unit 110. In this case, it is desirable that the feedback information creation unit 120 changes at least one of the disclosure object information and the disclosure format information so that anonymity of the analysis result 640 after change in the disclosure request may become high compared with anonymity of the analysis result 640 before change in the disclosure request.

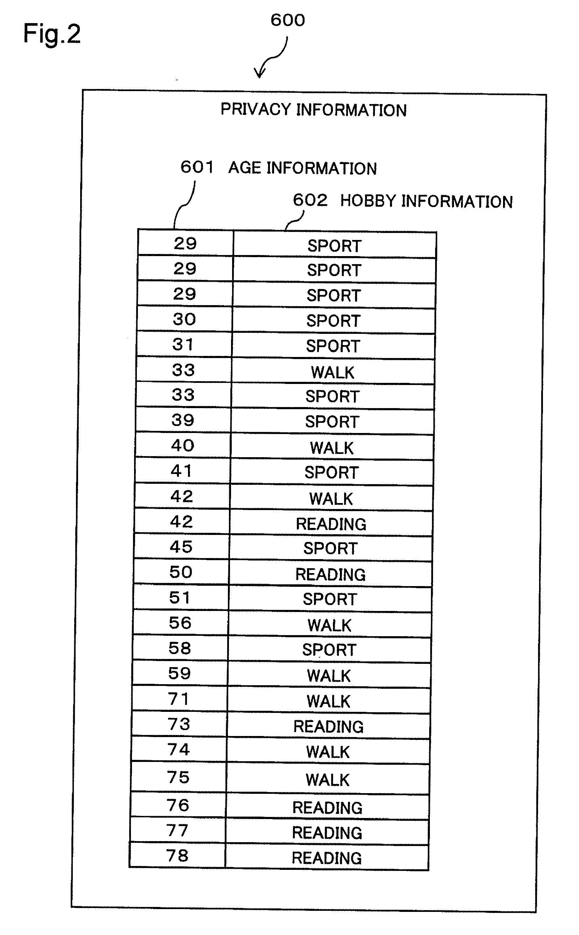

Fig. 2 is a diagram showing an example of privacy information 600 which the analysis unit 110 receives. As shown in Fig. 2, privacy information 600 includes a record which includes age information 601 and hobby information 602 as attribute information. Note that the attribute information includes an attribute name ("age information", for example) and an attribute value (a value of age information 601 like "30", for example). Note that the attribute name is also called as a type of the attribute information. Note that the attribute name of the attribute information is not shown in Fig. 2, Fig. 3, Fig. 6 and Fig. 9.

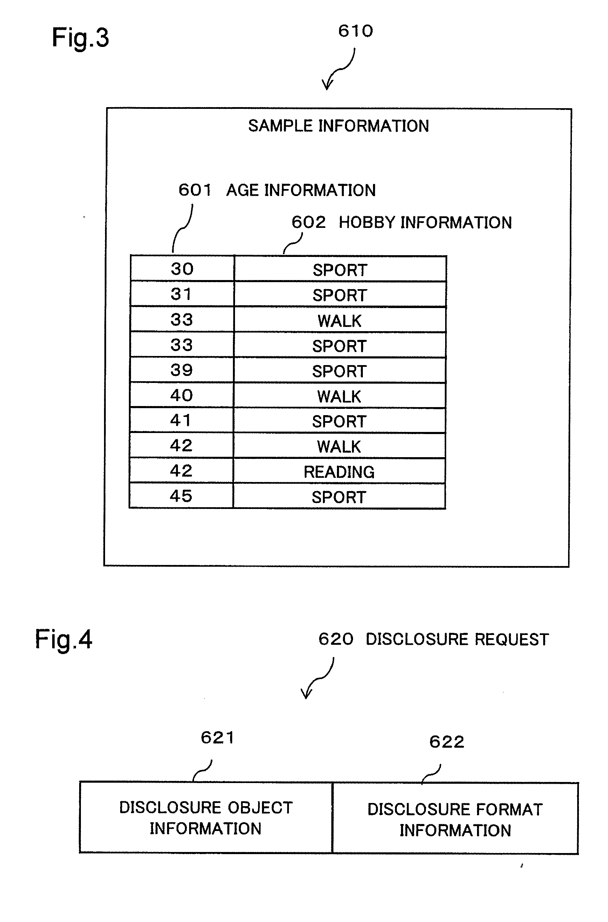

Fig. 3 is a diagram showing an example of sample information 610 which was selected in the analysis unit 110 based on the analysis object information included in the analysis command. As shown in Fig. 3, the sample information 610 includes a record which includes the age information 601 and the hobby information 602 as the selected attribute information.

Fig. 4 is a diagram showing an example of disclosure request 620 which the feedback information creation unit 120 receives. As shown in Fig. 4, the disclosure request 620 includes disclosure object information 621 and disclosure format information 622.

The disclosure object information 621 are information like "hobby information of persons of the age range in their thirties" which indicate the range of privacy information 600 (persons of an age range in their thirties) set as analysis objects, and types of attribute information (hobby information) set as analysis objects. Here, for example, the range of the privacy information 600 may be the range that combined ranges of optional things among an organization name, an age range, gender, an area, a time zone, and other optional attributes. The type of attribute information which the disclosure object information 621 indicates may be optional numbers of types of attribute information.

The disclosure format information 622 is information which indicates the disclosure form of the privacy information 600 (the sample information 610). For example, the disclosure format information 622 is information which indicates the form of disclosing an analysis result of the privacy information 600, such as a display by creating a list of attributes, and a display by creating a histogram.

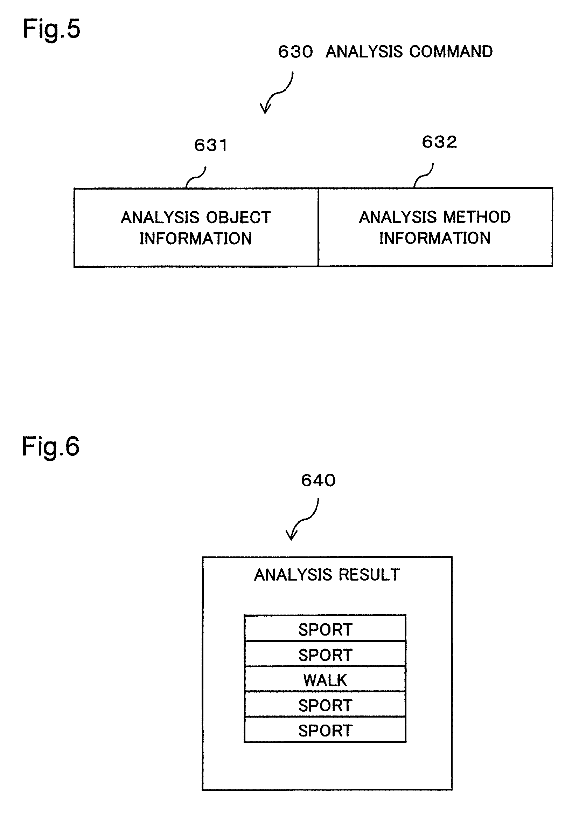

Fig. 5 is a diagram showing an example of an analysis command 630 which the feedback information creation unit 120 outputs to the analysis unit 110. As shown in Fig. 5, the analysis command 630 includes analysis object information 631 (for example, "thirties") and analysis method information 632 (for example, "creation of a list of hobby information ").

Here, the analysis object information 631 is information which indicates the range of the sample information 610 (information set as analysis objects among privacy information 600) created in the analysis unit 110. For example, the analysis object information 631 is information combined ranges of optional ones among the organization name, the age range, gender, the area, the time zone, and the other optional attributes.

For example, when the analysis object information 631 is the organization name ("A" company, for example), the sample information 610 includes a record in which the attribute name is "organization name information" and an attribute value includes attribute information which is "A" company among privacy information 600.

The analysis method information 632 is information which indicates a method to analyze the sample information 610 and the form of the created analysis result.

For example, the analysis method information 632 is information which indicates that a list is created about the attribute value of a specific attribute name ("hobby information", for example) among the sample information 610. In this case, for example, the analysis method information 632 is "creation of a list of hobby information".

Fig. 6 is a diagram showing an example of an analysis result 640 which the analysis unit 110 outputs. For example, the analysis result 640 is a list of hobby information as shown in Fig. 6.

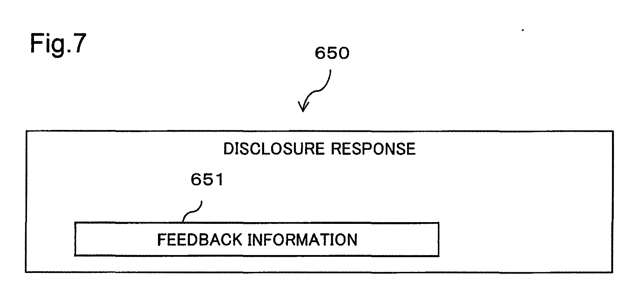

Fig. 7 is a diagram showing an example of disclosure response 650 created in the feedback information creation unit 120. The disclosure response 650 includes feedback information 651 as shown in Fig. 7.

As mentioned above, the feedback information 651 is information which suggests change in the contents concerning at least either the disclosure object information 621 or the disclosure format information 622. Accordingly, the feedback information 651 may be information which suggests change in those contents concerning both of the disclosure object information 621 and the disclosure format information 622. For example, the feedback information 651 is the information which suggests that the age range that is the disclosure object information 621 is expanded (for example, "thirties" are changed to "thirties and forties"). For example, the feedback information 651 may be information which suggests change in the number of times of iteration (number of repetition) of the fitting.

The above is the description of the outline of the anonymization device 100.

Next, a component of a hardware unit of the anonymization device 100 will be described.

Fig. 8 is a diagram showing a hardware configuration of the anonymization device 100 and its peripheral devices in this exemplary embodiment. As shown in Fig. 8, the anonymization device 100 includes a CPU (Central Processing Unit) 1070, a storage unit 1071, a storage device 1072, an input unit 1073, an output unit 1074 and a communication unit 1075.

The CPU 1070 operates an operating system (not shown) and controls a whole operation of the anonymization device 100 related to this exemplary embodiment. The CPU 1070 reads programs and data to the storage unit 1071 from a non-volatile recording medium (not shown) loaded on the storage device 1072, for example. And the CPU 1070 executes various processing as the analysis unit 110 and the feedback information creation unit 120 shown in Fig. 1 following the read program, and based on the read data.

Alternatively, the CPU 1070 may download optional one among programs and data to the storage unit 1071 from an external computer (not shown) connected to a communication network (not shown).

The storage unit 1071 stores optional one among programs and data. The storage unit 1071 may store the sample information 610 as shown in Fig. 3.

For example, the storage devices 1072 is an optical disc, a flexible disc, a magnetic optical disc, an external hard disk, or a semiconductor memory, and includes a non-volatile storage medium. The storage device 1072 records a program so that it is computer-readable. The storage device 1072 may record data so that it is computer-readable. The storage device 1072 may store the sample information 610.

The input unit 1073 is realized by a mouse, a keyboard, or a built-in key button, for example, and used for an input operation. The input unit 1073 is not limited to a mouse, a keyboard, or a built-in key button, it may be a touch panel, an accelerometer, a gyro sensor, or a camera, for example. The input unit 1073 is used in order to input the disclosure request 620, for example. The input unit 1073 may input privacy information 600.

The output unit 1074 is realized by a display, for example, and is used in order to check the disclosure response 650, for example.

The communication unit 1075 communicates with an external device (not shown). The anonymization device 100 may acquire the sample information 610 which the external device holds, for example, via the communication unit 1075. The anonymization device 100 may receive the disclosure request 620 from the external device via the communication unit 1075. The anonymization device 100 may output the disclosure response 650 to the external device via the communication unit 1075. The communication unit 1075 may be included in the analysis unit 110 and the feedback information creation unit 120.

The above is the description of hardware about each component in the anonymization device 100.

As described above, blocks of the function unit shown in Fig. 1 are realized by a hardware configuration shown in Fig. 3. However, a realization means for each unit provided in the anonymization device 100 is not limited to the above. That is, the anonymization device 100 may be realized by one device coupled physically, or two or devices separated physically are connected by a wire or a wireless, and it may be realized by these a plurality of devices.

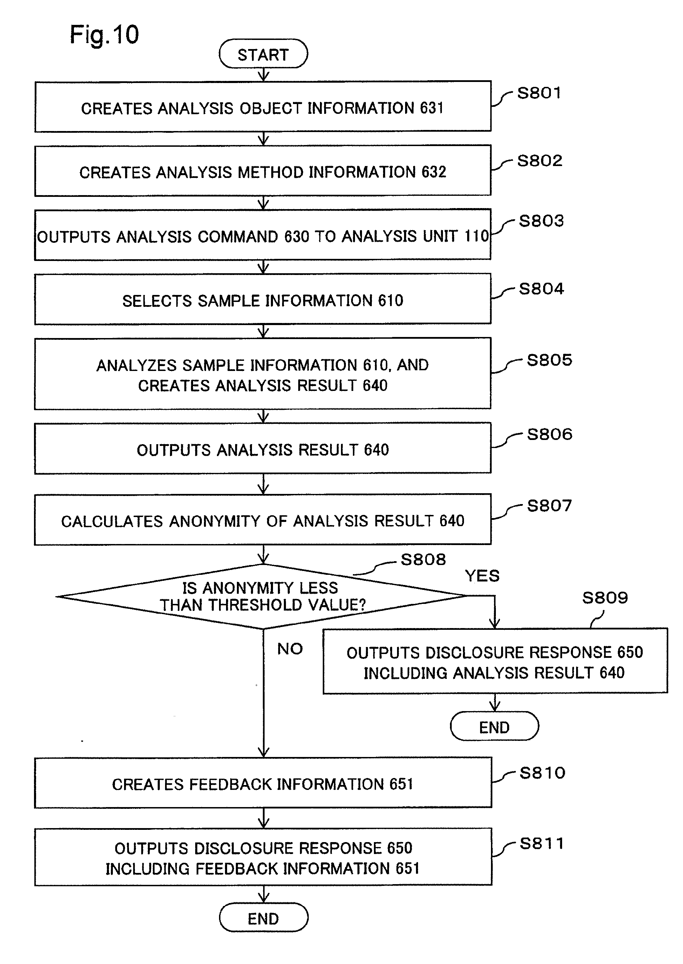

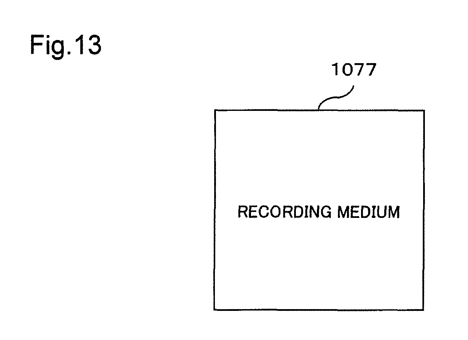

Fig. 13 is a diagram showing an example of a recording medium (storage medium) 1077 in which a program is recorded (stored). The recording medium 1077 is a non-volatile recording medium storing information non-temporarily. Alternatively, the recording medium 1077 may be a recording medium storing information temporarily. The recording medium 1077 records codes of a program (software) which make the anonymization device 100 (CPU 1070) execute operation shown in Fig. 10. In addition, the recording medium 1077 may further record optional programs and data.

Moreover the recording medium 1077 in which codes of the above-mentioned program (software) was recorded is supplied to the anonymization device 100, and the anonymization device 100 (CPU 1070) may read the codes of the program stored in the recording medium and execute it. Alternatively, The CPU 1070 may store codes of the program stored in the recording medium 1077 in the storage unit 1071. That is, this exemplary embodiment includes an exemplary embodiment of a recording medium which stores the program temporarily or non-temporarily which the anonymization device 100 (CPU 1070) executes.

Next, the analysis unit 110 will be described more in detail. As mentioned above, the analysis unit 110 analyzes the sample information 610 (information selected from privacy information 600) based on the analysis instruction 630 including the analysis object information 631 and the analysis method information 632, creates the analysis result 640, and outputs it.

For example, the analysis unit 110, based on the analysis object information 631, selects the sample information 610 from privacy information 600 stored in the storage device 1072 shown in Fig. 8 based on the analysis object information 621. Note that the analysis unit 110 may acquire privacy information 600 which an operator specified via the input unit 1073 and the select sample information 610 from the privacy information 600. The analysis unit 110 may acquire sample information 610 which an operator specified via the input unit 1073 among the privacy information 600. The analysis unit 110 may acquire privacy information 600 from an external device which is not illustrated via the communication unit 1075 and select the sample information 610 among the privacy information 600 based on the analysis object information 621. The analysis unit 110 may request output of the sample information 610 based on the analysis object information 621 to the external device which is not illustrated via the communication unit 1075 and acquire the sample information 610 which is outputted from the external device.

For example, when the analysis object information 631 is the organization name ("A" company, for example), the analysis unit 110 selects or acquires as the sample information 610 a record in which the attribute name is "organization name information" among privacy information 600, and an attribute value includes attribute information which is "A" company.

The analysis unit 110 analyzes the sample information 610 selected or acquired based on the analysis method information 632, creates the analysis result 640, and outputs it.

For example, the analysis method information 632 is information which indicates that an attribute value of a specific attribute name ("hobby information", for example) among the sample information 610 is selected, and a list of the attribute values is created. For example, the analysis method information 632 is "creation of a list of hobby information". The analysis method information 632 may be information which indicates that a specific function is fitted to specific attribute information among the sample information 610 and that a parameter of the function is calculated.

For example, the analysis method information 632 may be information which indicates that it is the fitting (it is also called function fitting) which fits (applies) a specific function (it is henceforth called a model function) to the sample information 610. For example, the analysis method information 632 is "to fit y= a + b" which indicates to fit the model function.

In this case, the analysis result 640 is the model function (the above-mentioned fit function) fitted by using the technique of the fitting. Note that the analysis result 640 may be a value of a parameter of the fit function.

Specifically, fitting is determining parameters a and b in Equation 1 so that the model function as shown in Equation 1, for example, may fit best to the distribution of the sample information 610. That is, the fit function is the model function to which the parameters of the result of the fitting were applied. Note that because the fitting of the function is the technology known well for a person skilled in the art, the detailed description will be omitted.

[Mathematical Equation 1]

$$f(x) = axe^{-bx^2} \quad \cdots \quad (\text{Equation 1})$$

For example, the analysis unit 110 executes analysis processing to fit the model function to the sample information 610, creates the fit function as the analysis result 640 and outputs it.

For example, in case of a model to obtain an average, the model function y is y=a. When a model is a regression line, the model function f(x) is f(x)= ax + b. When a model is normal distribution, the model function is a probability density function of the normal distribution. Alternatively, the model function may be an optional function other than the above-mentioned functions.

Specifically, when the model function is f(x)= ax + b (x is a value of an order of the attribute information) which indicates the regression line, the analysis result 640 is as follows. That is, for example, the analysis result 640 is f(x) =1.28x+159.13 which has "1.28" and "159.13" for each a and b which are parameters of the model function.

The above is the detailed description of the analysis unit 110.

Next, the feedback information creation unit 120 will be described in detail. As mentioned above, the feedback information creation unit 120 receives the disclosure request 620. Next, the feedback information creation unit 120 outputs the analysis command 630 created based on the disclosure request 620 to the analysis unit 110. The feedback information creation unit 120 determines anonymity based on the analysis result 640 received from the analysis unit 110, creates the disclosure response 650 including the analysis result or the feedback information 651 based on the determination result and outputs it.

When describing specifically, the feedback information creation unit 120 extracts information in relation to an analysis object from the disclosure object information 621 (for example, "hobby information on persons in their thirties") of the received disclosure request 620 and creates the analysis object information 631 (for example, "thirties").

Similarly, by combining the disclosure object information 621 (for example, "hobby information on a person in one's thirties") and the disclosure format information 622 (for example, "list of attribute values"), the feedback information creation unit 120 creates the analysis method information 632 (for example, "creation of a list of hobby information ").

Next, the feedback information creation unit 120 outputs the created analysis object information 631 and the analysis command 630 including the analysis method information 632 to the analysis unit 110.

The feedback information creation unit 120 calculates anonymity (1-diversity, for example) of the analysis result 640 received from the analysis unit 110. Here, when anonymity of the 1-diversity satisfied, because the attribute values are "sport" and "walk", for example, the anonymity of the analysis result 640 is "2" as shown in Fig. 6.

Next, when the calculated anonymity is less than the threshold value ("3", for example), the feedback information creation unit 120 creates the feedback information 651 and outputs it.

The feedback information 651 is information which suggests change in the contents concerning at least one of the disclosure object information 621 and the disclosure format information 622 as mentioned above. This information is information which suggests change in the contents of the disclosure object information 621 and the disclosure format information 622 by which the anonymity of the analysis result 640 after the change becomes high compared with anonymity of the analysis result 640 before the change. Accordingly, it is possible to indicate what the user does in order to acquire useful privacy information by confirming the outputted feedback information.

Note that the analysis result 640 after the change is the analysis result 640 which the anonymization device 100 creates, based on the disclosure object information 621 and the disclosure format information 622 whose contents were changed, as suggested by information which the feedback information 651 indicates. For example, the anonymization device 100 receives the disclosure request 620 including the disclosure object information 621 in which the disclosure object information 621 ("hobby information on persons in their thirties") were changed to ""hobby information on persons in their thirties and forties" based on the feedback information 651. In this case, the feedback information creation unit 120 creates the analysis command 630 based on this disclosure request 620. Next, the feedback information creation unit 120 outputs the created analysis command 630.

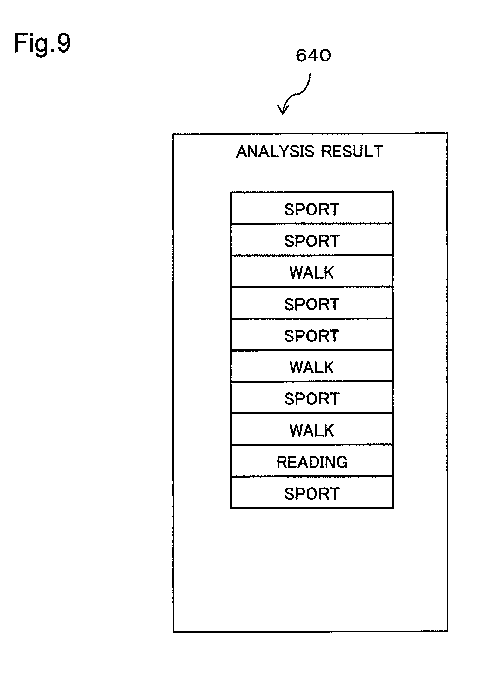

Next, the analysis unit 110 creates the analysis result 640 as shown in Fig. 9 based on this analysis command 630 and outputs to the feedback information creation unit 120. In this case, as shown in Fig. 9, the attribute values of the analysis result 640 are "sport", "walk" and "reading". Accordingly, the feedback information creation unit 120 calculates "3" as the anonymity (here, 1-diversity) of the analysis result 640 shown in Fig. 9.

Accordingly, the feedback information 651 is information which suggests change in the disclosure object information 621 and the disclosure format information 622 so that the anonymity of the analysis result 640 which the analysis unit 110 creates may satisfy the threshold value (anonymity is equal to or more than the threshold value, for example) .

When the anonymity of the analysis result 640 does not satisfy the threshold value, the anonymization device 100 does not disclose the analysis result 640. Specifically, the feedback information creation unit 120 outputs the disclosure response 650 including information which can be not disclosed to the output unit 1074 instead of the analysis result 640.

The feedback information creation unit 120 may change the contents of the analysis result 640 received from the analysis unit 110 and may create an inaccurate analysis result whose anonymity satisfies the threshold value. Moreover, the feedback information creation unit 120 may output the disclosure response 650 including the created inaccurate analysis result to the output unit 1074.

For example, the feedback information creation unit 120 changes one of the attribute values ("sport", for example) of the analysis result 640 to a dummy data ("fishing", for example). For example, the dummy data is information created at random which is not included in privacy information 600 or information based on privacy information 600 other than the sample information 610.

When the analysis result 640 is the fit function, the feedback information creation unit 120 may output the disclosure response 650 including the analysis result 640 in which the value of the parameter of the fit function was changed.

The feedback information creation unit 120 may direct the analysis unit 110 to change and analyze the particle size of sample data, and output the analysis result 640 received as the response. In this case, the analysis unit 110 analyzes the sample information 610 based on the directions of the feedback information creation unit 120.

When the anonymity of the analysis result 640 satisfies the threshold value, the anonymization device 100 outputs the disclosure response 650 including the analysis result 640.

When the anonymity of the analysis result 640 does not satisfy the threshold value as mentioned above, the user cannot acquire an analysis result. Or, when the anonymity of the analysis result 640 does not satisfy the threshold value, analyzed information which the user receives is an analysis result whose accuracy is more inferior to an original analysis result. On the other hand, when the anonymity of the analysis result 640 satisfies the threshold value, the user can acquire useful analyzed information.

As described above, the feedback information 651 is information which indicates what a user does in order to acquire useful privacy information (the analysis result 640 of the privacy information 600) for oneself.

Next, operation of this exemplary embodiment will be described in detail with reference to Figs. 1 - 10.

Fig. 10 is a flow chart showing operation of this exemplary embodiment.

The anonymization device 100 starts operation as a trigger when receiving the disclosure request 620.

First, the feedback information creation unit 120 creates the analysis object information 631 based on the disclosure object information 621 (S801).

Next, the feedback information creation unit 120 creates the analysis method information 632 based on the disclosure object information 621 and the disclosure format information 622 (S802).

Next, the feedback information creation unit 120 outputs the created analysis command 630 including the analysis object information 631 and the analysis method information 632 to the analysis unit 110 (S803).

Next, the analysis unit 110 selects the sample information 610 based on the analysis object information 631 which is included in the received analysis command 630 (S804).

Next, the analysis unit 110 analyzes the selected sample information 610 based on the analysis method information 632 which is included in the received analysis command 630 and creates the analysis result 640 (S805).

Next, the analysis unit 110 outputs the created analysis result 640 (S806).

Next, the feedback information creation unit 120 calculates the anonymity of the analysis result 640 received from the analysis unit 110 (S807).

Next, the feedback information creation unit 120 determines whether the calculated anonymity is less than the threshold value (S808).

When the anonymity is equal to or greater than the threshold value (the anonymity is "2", and the threshold value is "2", for example) (YES in S808), the feedback information creation unit 120 outputs the disclosure response 650 including the analysis result 640 (S809). And the processing is ended.

When the anonymity is less than the threshold value (the anonymity is "2", and the threshold value is "3", for example) (NO in S808), the feedback information creation unit 120 creates the feedback information 651 (S810).

For example, the feedback information creation unit 120 creates the feedback information 651 including information which suggests to change the disclosure object information 621 so that the number of records of the sample information 610 may increase based on the disclosure object information 621. This is because it is expectable that the types of attribute values also tend to increase and 1-anonymity becomes large when the number of records of the sample information 610 increases.

Alternatively, the anonymization device 100 may create the feedback information 651 as follows. First, the feedback information creation unit 120 creates the analysis object information 631 and the analysis method information 632 which were changed their contents based on a regulation held in a means which is not illustrated.

For example, the regulation which is held in the means which is not illustrated is " to add the age (for example, "forties") of the range where the number of ten's place (for example, "3") increased 1 for an analysis object"

Next, the anonymization device 100 executes the same operation as above-mentioned S803 - S807 and calculates the anonymity of the analysis result 640 based on the analysis object information 631 and the analysis method information 632 which were changed their contents. The feedback information creation unit 120 creates the feedback information 651 based on a plurality of anonymity calculated in this way.

At that time, the anonymization device 100 may repeat the above-mentioned procedure until the calculated anonymity becomes larger than the threshold value. When the calculated anonymity is lower than the threshold value only by having added "forties" to the analysis object, for example, the anonymization device 100 confirms whether the anonymity calculated by further adding "fifties" is equal to or greater than the threshold value. And when the calculated anonymity is equal to or greater than the threshold value, the anonymization device 100 creates the feedback information 651 and outputs it. When the anonymity calculated by further adding "fifties" is lower than the threshold value, the anonymization device 100 continues to do like adding "sixties", adding "seventies" and so on until the anonymity is satisfied. When the anonymity is not satisfied even if all ages are added, the anonymization device 100 may output an error.

Next, the feedback information creation unit 120 outputs the disclosure response 650 including the created feedback information 651 (S811). And processing is ended.

The example when the feedback information creation unit 120 creates one of feedback information 651 has been described in the above-mentioned description. However, the feedback information creation unit 120 may create a plurality of feedback information 651. For example, the feedback information creation unit 120 may create feedback information 651 of "changing" an analysis object as "forties" to "twenties and thirties" and feedback information 651 of "changing to "thirties and forties"".

When the disclosure object information 621 indicates the range of the privacy information 600 set as analysis objects by a plurality of conditions, the feedback information creation unit 120 may create feedback information 651 corresponding to the respective conditions. For example, it is assumed that the disclosure object information 621 indicates "age is thirties, and an address is Tokyo" as the range of the privacy information 600 set as analysis objects. In this case, the feedback information creation unit 120 may create feedback information 651 corresponding to the respective conditions such as "the condition of the age is changed to thirties and forties" and "the condition of the address is changed to Tokyo and Kanagawa".

The feedback information creation unit 120 may output the feedback information 651 including a plurality of suggestions. For example, the feedback information creation unit 120 may output feedback information 651 of "changing" an analysis object as "forties" to ""twenties and thirties" or "thirties and forties"". The feedback information creation unit 120 may output feedback information 651 of "changing the condition of the age to 30 years old to 45 years old, and changing the condition of the address to Tokyo and Kanagawa."

The first effect in this exemplary embodiment mentioned above is that it becomes possible to show what a user does in order to acquire useful privacy information.

The reason is that the following configuration is included. First, the analysis unit 110 analyzes the privacy information 600 based on the analysis command 630 which directs an analysis of the privacy information 600 and outputs the analysis result 640. Secondly, the feedback information creation unit 120 outputs the analysis command 630 to the analysis unit 110, creates the disclosure response 650 including the feedback information 651 based on the anonymity of the analysis result 640 received as a response and outputs it.

The second effect in this exemplary embodiment mentioned above is that it becomes possible to indicate information for a user to determine a more appropriate analysis object.

The reason is that the feedback information creation unit 120 creates a plurality of feedback information 651, and the feedback information creation unit 120 creates feedback information 651 including a plurality of suggestions, and outputted.

<Second Exemplary Embodiment>

Next, a second exemplary embodiment of the present invention will be described in detail with reference to drawings. Hereinafter, the description will be omitted regarding the contents overlapping the above-mentioned description in the range where a description of this exemplary embodiment does not become indefinite.

The configuration of this exemplary embodiment is the same as the configuration of the anonymization device 100 of the first exemplary embodiment shown in Fig. 1 and Fig. 8.

This exemplary embodiment is different in operation when because the anonymity of the analysis result 640 shown in Fig. 6 does not satisfy the threshold value, the feedback information creation unit 120 outputs disclosure response 650 including inaccurate analysis result. The feedback information creation unit 120 changes the contents of the analysis result 640 received from the analysis unit 110 and creates an inaccurate analysis result in which the anonymity satisfies the threshold value.

In this exemplary embodiment, the feedback information creation unit 120 outputs disclosure response 650 including the accuracy information. The accuracy information is information which indicates how much an inaccurate analysis result outputted as a response of disclosure request 620 is accurate (or inaccurate). Specifically, the accuracy information indicates accuracy of an inaccurate analysis result corresponding to the analysis result 640.

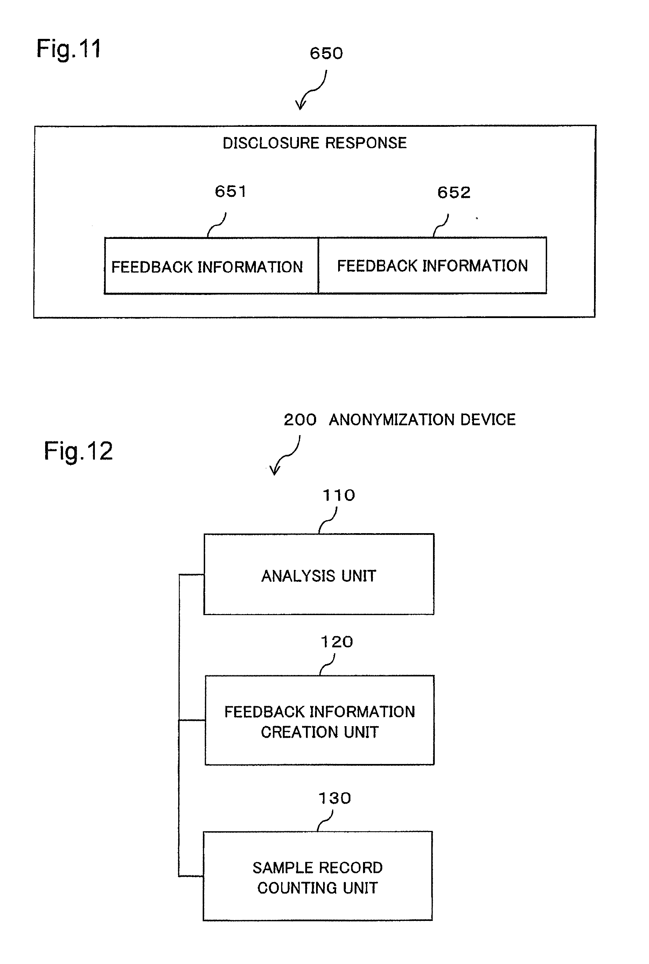

Fig. 11 is a diagram showing an example of disclosure response 650. As shown in Fig. 11, the disclosure response 650 includes feedback information 651 and accuracy information 652.

The accuracy information 652 is information which indicates accuracy of an inaccurate analysis result corresponding to a certain disclosure request 620 which the anonymization device 100 can output. For example, the accuracy information 652 is a ratio that right attribute values are included in an inaccurate analysis result (for example, "80%").

For example, the accuracy information 652 may be information expressed by sentences as "replaces at least one attribute value". Accuracy information 652 may be a change rate of a particle size of the sample information 610. The accuracy information 652 may be presence or absence of change in the values of parameters of a fit function.

For example, the feedback information creation unit 120 may output accuracy information 652 like ""80%" changes to "100%"". This accuracy information 652 includes accuracy (80%) of an inaccurate analysis result and accuracy (100%) of an analysis result 640 when the analysis object information 631 and the analysis method information 632 are changed based on the feedback information 651. That is, this accuracy information 652 indicates information in relation to a change in accuracy when the analysis object information 631 and the analysis method information 632 are changed based on the feedback information 651. For example, the feedback information 651 and this accuracy information 652 indicate that the accuracy is "80%" when the range of the disclosure object is "thirties", and the accuracy is "100%" when the range of the disclosure object is "thirties and forties".

The first effect in this exemplary embodiment mentioned above is that it becomes possible to show a user how accurate an inaccurate analysis result acquirable as a response of disclosure request 620 is, in addition to the effect of the first exemplary embodiment.

The reason is that the feedback information creation unit 120 outputs the disclosure response 650 including the accuracy information 652.

The second effect in this exemplary embodiment mentioned above is that it becomes possible to show a user a change in accuracy when the analysis object information 631 and the analysis method information 632 are changed based on the feedback information 651, in addition to the effect of the first exemplary embodiment.

The reason is that the feedback information creation unit 120 outputs the disclosure response 650 including the inaccurate analysis result and accuracy of then analysis result 640 after changing the analysis object information 631 and the analysis method information 632 based on the feedback information 651.

<Third Exemplary Embodiment>

Next, a third exemplary embodiment of the present invention will be described in detail with reference to drawings. Hereinafter, the description will be omitted regarding the contents overlapping the above-mentioned description in the range where a description of this exemplary embodiment does not become indefinite.

The configuration of this exemplary embodiment is the same as the configuration of the anonymization device 100 of the first exemplary embodiment shown in Fig. 1 and Fig. 8.

This exemplary embodiment is an exemplary embodiment when the anonymization device 100 suggests changing the disclosure form to a user in order to acquire useful privacy information for the user.

The disclosure requests 620 in this exemplary embodiment are that the disclosure object information 621 is "the height in thirties", and the disclosure format information 622 is "the distribution of the attribute value", for example.

The feedback information creation unit 120 receives the above-mentioned disclosure request 620.

The analysis commands 630 in this exemplary embodiment are that the analysis object information 631 is "thirties", and the analysis method information 632 is ""a*exp (-b*x^4)" is fitted to the distribution of the height", for example. Here, "a*exp (-b*x^4)" is the model function and indicates the mathematical expression indicated in Equation 2. It is similar as follows.

[Mathematical Equation 2]

$$f(x) = axe^{-bx^4} \quad \cdots \quad \text{(Equation 2)}$$

Next, the feedback information creation unit 120 outputs the above-mentioned analysis command 630.

Next, the analysis unit 110 receives the analysis command 630.

Next, the analysis unit 110 refers to the privacy information 600 and selects the sample information 610 based on the analysis object information 631.

Next, the analysis unit 110 fits the model function indicated by the analysis method information 632 to the selected sample information 610 and creates the analysis results 640.

For example, the analysis results 640 in this exemplary embodiment are the parameters (a=2.5 and b=3.2, for example) of the fit function.

Next, the analysis unit 110 outputs the analysis result 640.

Next, the feedback information creation unit 120 receives the analysis result 640.

Next, the feedback information creation unit 120 creates the disclosure response 650 including the feedback information 651 and the accuracy information 652 based on the analysis result 640.

For example, the feedback information 651 on the disclosure response 650 in this exemplary embodiment is "changes "a*exp(-b*x^4)" to "a*exp(-b*x^2)"". For example, the accuracy information 652 is ""large change of the parameter" changes into "small change of the parameter"".

As mentioned above, the anonymization device 100 in this exemplary embodiment suggests a change of the disclosure form in relation to the disclosure format information 622 instead of changing the disclosure object information 621. Note that the disclosure format information 622 is not information which indicates the analysis method information 632 directly in this exemplary embodiment.

Accordingly, for example, the feedback information creation unit 120 creates the analysis method information 632 and the feedback information 651 with reference to the list of model function held by the storage unit 1071. Here, for example, the list of model function is {a*exp(-b*x^4), a*exp(-b*x^4), ...}.

For example, when "f(x) =a*exp(-b*x^2)" and "f(x) =a*exp(-b*x^4)" are compared, the latter value of "f(x)" becomes suddenly small compared with the former value of "f(x)" with increase of "x". Accordingly, the distribution expressed in the latter "f(x) =a*exp(-b*x^4)" is narrow, and anonymity thereof becomes low.

Accordingly, for example, the feedback information creation unit 120 directs the analysis unit 110 to analyze by the latter equation and receives the analysis result 640 first. Next, when the anonymity of the analysis result 640 is lower than the threshold value, the feedback information creation unit 120 directs the analysis unit 110 to further analyze by the former equation and receives the analysis result 640.

Next, the feedback information creation unit 120 creates the feedback information 651 and the accuracy information 652 as mentioned above based on these analysis results 640.

For example, the user who has received the above-mentioned disclosure response 650 can make "f(x) =a*exp(-b*x^2)" of the feedback information 651 corresponding to "small change in parameters" of the accuracy information 652 disclosure format information 622 of the next disclosure request 620.

Alternatively, the feedback information creation unit 120 may output the disclosure response 650 not including the accuracy information 652.

The effect in this exemplary embodiment mentioned above is that it becomes possible to indicate a change in accuracy by change in the disclosure form to a user in addition to the effect of the first exemplary embodiment.

The reason is that the analysis unit 110 fits model function to the sample information 610 and created the analysis result 640, and the feedback information creation unit 120 creates the feedback information 651 including the disclosure form.

<Fourth Exemplary Embodiment>

Next, a fourth exemplary embodiment of the present invention will be described in detail with reference to drawings. Hereinafter, the description will be omitted regarding the contents overlapping the above-mentioned description in the range where a description of this exemplary embodiment does not become indefinite.

Fig. 12 is a block diagram showing a configuration of the fourth exemplary embodiment.

Referring to Fig. 12, the anonymization device 200 related to this exemplary embodiment includes the analysis unit 110, the feedback information creation unit 120 and a sample record counting unit 130. Note that a component shown in Fig. 12 is not a component of a hardware unit, but indicates a component of the function unit.

The component of a hardware unit of the anonymization device 200 related to this exemplary embodiment is equivalent to the anonymization device 100 shown in Fig. 8.

This exemplary embodiment is different in operation when the anonymity of the analysis result 640 does not satisfy the threshold value compared with the first exemplary embodiment.

The sample record counting unit 130 counts sample records based on the analysis object information 631 and outputs the result. For example, when analysis object information 631 is "thirties and forties" in the privacy information 600 shown in Fig. 2, the counting result of the sample records are "10".

When the anonymity of the analysis result 640 does not satisfy the threshold value, the feedback information creation unit 120 changes the analysis object information 631 based on a regulation held in a means which is not illustrated. For example, when the analysis object information 631 is "thirties" in the privacy information 600 shown in Fig. 2, 1-anonymity is "2". Here, because 1-anonymity is less than the threshold value when the threshold value is "3", the anonymity of the analysis result 640 does not satisfy the threshold value. Accordingly, for example, the feedback information creation unit 120 changes the analysis object information 631 to "thirties and forties" from "thirties".

Next, the feedback information creation unit 120 outputs the changed analysis object information 631 to the sample record counting unit 130.

Next, the feedback information creation unit 120 receives the counting result ("10", for example) of the sample record from the sample record counting unit 130.

Next, the feedback information creation unit 120 creates feedback information 651 based on the analysis result 640 received from the analysis unit 110 and the counting result of the sample record received from the sample record counting unit 130. That is, the feedback information creation unit 120 creates the feedback information 651 which suggests that the disclosure object information 621 is changed to "thirties and forties" from "thirties" based on an increase in the number of the sample records (from "5" to "10", for example).

Next, the feedback information creation unit 120 outputs the disclosure response 650 including the created feedback information 651.

The effect in this exemplary embodiment mentioned above is that a load which creates the feedback information 651 can be reduced in addition to the effect of the first exemplary embodiment.

The reason is that the sample record counting unit 130 counts the sample records, and the feedback information creation unit 120 creates the feedback information 651 based on that counting result.

Each component described in each above mentioned exemplary embodiment does not necessarily need to be separately independent existence. For example, as for each component, a plurality of components is realized as one module, and one component may be realized by a plurality of modules. As for each component, it may be a configuration that a certain component may be a part of the other component, and a part of a certain component and a part of the other component may overlap each other.

Each component and the module which realizes each component in each exemplary embodiment described above may be realized in terms of the hardware device or may be realized by a computer and a program if it possible as needed. Those modules may be realized by intermixture with a module in terms of the hardware, a computer, and a program. The program is recorded in a non-volatile computer-readable recording medium such as a magnetic disk and a semiconductor memory and provided, it is read by a computer at a time of starting of the computer. This read program functions the computer as a component in each exemplary embodiment mentioned above by controlling operation of the computer.

According to each exemplary embodiment described above, although a plurality of operations has been described in turn by the form of the flow chart, the order of the description does not limit an order of executing a plurality of operations. Therefore, when each exemplary embodiment is carried out, the order of the plurality of operations can be changed within a range of not making trouble in the contents.

Moreover, it is not limited to a plurality of operations being executed at a timing which is separately different in each exemplary embodiment described above. For example, other operations may be generated during execution of a certain operation, or an execution timing of a certain operation and other operations may overlap partially or in all.

Moreover, although a certain operation will be an opportunity of other operation in each exemplary embodiment described above, the description does not limit all relations between a certain operation and other operations. Therefore, when each exemplary embodiment is carried out, the relation of the plurality of operations can be changed within a range of not making trouble in the contents. The concrete description of each operation of each component does not limit each operation of each component. Therefore, each concrete operation of each component may be changed within limits which do not cause trouble to the characteristics of functional, efficient and others when carrying out each exemplary embodiment.

As mentioned above, although the present invention has been described with reference to the exemplary embodiments, the present invention is not limited to the above-mentioned exemplary embodiments. Various changes which a person skilled in the art can understand in the scope of the present invention can be performed in a configuration and details of the present invention.

This application claims priority based on the Japanese Patent Application No. 2011-183610 filed on August 25, 2011 and the disclosure of which is hereby incorporated in its entirety.

INDUSTRIAL APPLICABILITY

For example, the present invention can be applied to a statistical work service based on privacy information.

DESCRIPTION OF THE REFERENCE NUMERALS

| | |
|---|---|
| 100 | anonymization device |
| 110 | analysis unit |
| 120 | feedback information creation unit |
| 130 | sample record counting unit |
| 200 | anonymization device |
| 600 | privacy information |
| 601 | age information |
| 602 | hobby information |
| 610 | sample information |
| 620 | disclosure request |
| 621 | disclosure object information |
| 622 | disclosure format information |
| 630 | analysis command |
| 631 | analysis object information |
| 632 | analysis method information |
| 640 | analysis result |
| 650 | disclosure response |
| 651 | feedback information |
| 652 | accuracy information |
| 1070 | CPU |
| 1071 | storage unit |
| 1072 | storage device |
| 1073 | input unit |
| 1074 | output unit |
| 1075 | communication unit |
| 1077 | recording medium |

**Claims**

1.  An anonymization device comprising:

an analysis means for outputting, concerning privacy information including at least one or more personal information for each individual, an analysis result of the privacy information based on an analysis command including analysis object information which indicates the personal information set as an analysis object and analysis method information which indicates an analysis method; and
a feedback information creation means for creating the analysis command on the basis of a disclosure request including disclosure object information indicating an object to be disclosed and disclosure format information indicating a format of the disclosure, outputting the analysis command to the analysis means, and creating and outputting a disclosure response including feedback information which suggests a change to increase anonymity concerning at least one of the disclosure object information and the disclosure format information, on the basis of the anonymity of the analysis result received from the analysis means, concerning the privacy information.

2.  The anonymization device according to claim 1, wherein
the feedback information creation means creates an inaccurate analysis result which changed the contents of the analysis result so that the anonymity corresponding to the analysis result may satisfy a threshold value and creates accuracy information which indicates accuracy of the inaccurate analysis result, and
the disclosure response includes the accuracy information.

**3.** The anonymization device according to claim 2, wherein
the feedback information creation means creates the accuracy information which further indicates accuracy of the analysis result when the disclosure object information and the disclosure format information are changed based on the suggestion of the change to increase the anonymity corresponding to the accuracy of the inaccurate analysis result.

**4.** The anonymization device according to any one of claims 1 to 3, wherein
the analysis unit 110 fits a specific function and analyzes privacy information, and
the feedback information creation means creates the disclosure response including feedback information which suggests to change the specific function in the disclosure format information so that the anonymity may become high.

**5.** The anonymization device according to any one of claims 1 to 4, wherein
the feedback information creation means creates the disclosure response including feedback information which suggests changing the disclosure object information so that the number of records of the personal information set as the analysis object may be increased.

**6.** The anonymization device according to any one of claims 1 to 5 further comprising a sample record counting means for counting the number of records of the personal information set as the analysis object, and outputting the counting result, wherein
the feedback information creation means creates the above based on the analysis result and the counting result.

**7.** An anonymization method which a computer executes and comprising:

outputting, concerning privacy information including at least one or more personal information for each individual, an analysis result of the privacy information based on an analysis command including analysis object information which indicates the personal information set as an analysis object and analysis method information which indicates an analysis method;
creating and outputting the analysis command on the basis of a disclosure request including disclosure object information indicating an object to be disclosed and disclosure format information indicating the format of the disclosure; and creating and outputting a disclosure response including feedback information which suggests a change to increase anonymity concerning at least one of the disclosure object information and the disclosure format information, on the basis of the anonymity of the analysis result, concerning the privacy information.

**8.** The anonymization method according to claim 7, wherein
the computer creates an inaccurate analysis result which changed the contents of the analysis result so that the anonymity corresponding to the analysis result may satisfy a threshold value, and creates accuracy information which indicates accuracy of the inaccurate analysis result, and
the disclosure response includes the accuracy information.

**9.** The anonymization method according to claim 8, wherein
the computer creates the accuracy information which further indicates accuracy of the analysis result when the disclosure object information and the disclosure format information are changed based on the suggestion of the change to increase the anonymity corresponding to the accuracy of the inaccurate analysis result.

**10.** A nonvolatile medium recording a program for making a computer execute processing of:

outputting, concerning privacy information including at least one or more personal information for each individual, an analysis result of the privacy information based on an analysis command including analysis object information which indicates the personal information set as an analysis object and analysis method information which indicates an analysis method;
creating and outputting the analysis command on the basis of a disclosure request including disclosure object information indicating an object to be disclosed and disclosure format information indicating the format of the disclosure; and creating and outputting a disclosure response including feedback information which suggests a change to increase anonymity concerning at least one of the disclosure object information and the disclosure format information, on the basis of the anonymity of the analysis result, concerning the privacy information.

Fig.1

100 ANONYMIZATION DEVICE

110

ANALYSIS UNIT

120

FEEDBACK INFORMATION
CREATION UNIT

Fig.2

600

PRIVACY INFORMATION

601 AGE INFORMATION

602 HOBBY INFORMATION

| 29 | SPORT |
|----|-------|
| 29 | SPORT |
| 29 | SPORT |
| 30 | SPORT |
| 31 | SPORT |
| 33 | WALK |
| 33 | SPORT |
| 39 | SPORT |
| 40 | WALK |
| 41 | SPORT |
| 42 | WALK |
| 42 | READING |
| 45 | SPORT |
| 50 | READING |
| 51 | SPORT |
| 56 | WALK |
| 58 | SPORT |
| 59 | WALK |
| 71 | WALK |
| 73 | READING |
| 74 | WALK |
| 75 | WALK |
| 76 | READING |
| 77 | READING |
| 78 | READING |

## Fig.3

610

SAMPLE INFORMATION

601 AGE INFORMATION

602 HOBBY INFORMATION

| 30 | SPORT |
|----|-------|
| 31 | SPORT |
| 33 | WALK |
| 33 | SPORT |
| 39 | SPORT |
| 40 | WALK |
| 41 | SPORT |
| 42 | WALK |
| 42 | READING |
| 45 | SPORT |

## Fig.4

620 DISCLOSURE REQUEST

621

622

| DISCLOSURE OBJECT INFORMATION | DISCLOSURE FORMAT INFORMATION |
|-------------------------------|-------------------------------|

## Fig.5

630  ANALYSIS COMMAND

631

632

| ANALYSIS OBJECT INFORMATION | ANALYSIS METHOD INFORMATION |
|---|---|

## Fig.6

640

ANALYSIS RESULT

| |
|---|
| SPORT |
| SPORT |
| WALK |
| SPORT |
| SPORT |

Fig.7

650

DISCLOSURE RESPONSE

651

FEEDBACK INFORMATION

# Fig.8

100 ANONYMIZATION DEVICE

1075
COMMUNICATION UNIT

1070
CPU

1071
STORAGE UNIT

1072
STORAGE DEVICE

1073
INPUT UNIT

1074
OUTPUT UNIT

# Fig.9

640

| ANALYSIS RESULT |
|---|
| SPORT |
| SPORT |
| WALK |
| SPORT |
| SPORT |
| WALK |
| SPORT |
| WALK |
| READING |
| SPORT |

## Fig.10

```
                    ( START )
                        │
                        ▼
┌─────────────────────────────────────────────┐
│   CREATES ANALYSIS OBJECT INFORMATION 631    │──── S801
└─────────────────────────────────────────────┘
                        │
                        ▼
┌─────────────────────────────────────────────┐
│   CREATES ANALYSIS METHOD INFORMATION 632    │──── S802
└─────────────────────────────────────────────┘
                        │
                        ▼
┌─────────────────────────────────────────────┐
│ OUTPUTS ANALYSIS COMMAND 630 TO ANALYSIS UNIT 110 │──── S803
└─────────────────────────────────────────────┘
                        │
                        ▼
┌─────────────────────────────────────────────┐
│      SELECTS SAMPLE INFORMATION 610          │──── S804
└─────────────────────────────────────────────┘
                        │
                        ▼
┌─────────────────────────────────────────────┐
│   ANALYZES SAMPLE INFORMATION 610, AND       │──── S805
│      CREATES ANALYSIS RESULT 640             │
└─────────────────────────────────────────────┘
                        │
                        ▼
┌─────────────────────────────────────────────┐
│       OUTPUTS ANALYSIS RESULT 640            │──── S806
└─────────────────────────────────────────────┘
                        │
                        ▼
┌─────────────────────────────────────────────┐
│  CALCULATES ANONYMITY OF ANALYSIS RESULT 640 │──── S807
└─────────────────────────────────────────────┘
                        │
                        ▼            ┌─── S808
                   ╱───────────╲              YES
                  ╱ IS ANONYMITY ╲────────────────┐        S809
                  ╲ LESS THAN     ╱                │
                   ╲THRESHOLD VALUE?               ▼
                    ╲───────────╱       ┌──────────────────────────┐
                        │  NO           │ OUTPUTS DISCLOSURE RESPONSE 650 │
                        │               │ INCLUDING ANALYSIS RESULT 640   │
                        │               └──────────────────────────┘
                        │                          │
                        │                          ▼
                        │                      ( END )
                        ▼
┌─────────────────────────────────────────────┐
│     CREATES FEEDBACK INFORMATION 651         │──── S810
└─────────────────────────────────────────────┘
                        │
                        ▼
┌─────────────────────────────────────────────┐
│  OUTPUTS DISCLOSURE RESPONSE 650             │──── S811
│  INCLUDING FEEDBACK INFORMATION 651          │
└─────────────────────────────────────────────┘
                        │
                        ▼
                    ( END )
```

Fig.11

650

DISCLOSURE RESPONSE

651                          652

| FEEDBACK INFORMATION | FEEDBACK INFORMATION |

Fig.12

200   ANONYMIZATION DEVICE

110

ANALYSIS UNIT

120

FEEDBACK INFORMATION
CREATION UNIT

130

SAMPLE RECORD
COUNTING UNIT

Fig.13

1077

RECORDING MEDIUM

## INTERNATIONAL SEARCH REPORT

| International application No. |
| --- |
| PCT/JP2012/071250 |

| A. CLASSIFICATION OF SUBJECT MATTER |
| --- |
| *G06F21/24*(2006.01)i, *G06F17/30*(2006.01)i, *G06Q30/02*(2012.01)i |

According to International Patent Classification (IPC) or to both national classification and IPC

| B. FIELDS SEARCHED |
| --- |
| Minimum documentation searched (classification system followed by classification symbols)<br>G06F21/24, G06F17/30, G06Q30/02 |

| Documentation searched other than minimum documentation to the extent that such documents are included in the fields searched |
| --- |
| Jitsuyo Shinan Koho     1922-1996    Jitsuyo Shinan Toroku Koho    1996-2012<br>Kokai Jitsuyo Shinan Koho   1971-2012    Toroku Jitsuyo Shinan Koho    1994-2012 |

| Electronic data base consulted during the international search (name of data base and, where practicable, search terms used) |
| --- |
|  |

### C. DOCUMENTS CONSIDERED TO BE RELEVANT

| Category* | Citation of document, with indication, where appropriate, of the relevant passages | Relevant to claim No. |
| --- | --- | --- |
| A | JP 2008-217425 A (Hitachi, Ltd.),<br>18 September 2008 (18.09.2008),<br>paragraphs [0158] to [0164]; fig. 17<br>& US 2008/0222319 A1 | 1-10 |
| A | JP 2004-287846 A (NTT Data Corp.),<br>14 October 2004 (14.10.2004),<br>abstract<br>(Family: none) | 1-10 |
| A | JP 2007-219636 A (Nippon Telegraph and Telephone Corp.),<br>30 August 2007 (30.08.2007),<br>abstract<br>(Family: none) | 1-10 |

☐ Further documents are listed in the continuation of Box C.      ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07 September, 2012 (07.09.12) | 18 September, 2012 (18.09.12) |

| Name and mailing address of the ISA/ | Authorized officer |
| --- | --- |
| Japanese Patent Office |  |
| Facsimile No. | Telephone No. |

Form PCT/ISA/210 (second sheet) (July 2009)

**25**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008117014 A
- JP 2007219636 A
- JP 2011183610 A